# EUROPEAN PATENT APPLICATION

(11) **EP 4 644 097 A1**
(43) Date of publication of application: **05.11.2025**
(21) Application number: 25169141.6
(22) Date of filing: 08.04.2025
(51) Int. Cl.: B29C 65/10, B65B 51/20, B65B 51/26, B29K 23/00, B29K 705/02, B29K 711/12, B29L 9/00

(54) **DEVICE FOR DIRECTING A HEATED AIR FLOW TOWARDS A WEB OF PACKAGING MATERIAL, FORMING AND SEALING UNIT FOR FORMING A TUBE FROM A WEB OF PACKAGING MATERIAL AND PACKAGING MACHINE FOR PRODUCING SEALED PACKAGES FROM A PACKAGING MATERIAL**

(30) Priority: 03.05.2024 IT 202400009961
(71) Applicant: Tetra Laval Holdings & Finance S.A., 1009 Pully (CH)
(72) Inventor: MEO, Emanuele Antonino, 41123 Modena (IT)
(74) Representative: Tetra Pak Patent Attorneys

(57) **Abstract**

It is described a device (17) for directing a heated air flow towards a first lateral portion (4A) of a web (4) of packaging material, the device (17) with a distribution housing (30) provided with a first inlet opening (31) for receiving the heated air flow; and a diffusion housing (42) in fluidic communication with the distribution housing (30) and comprising a first wall (43) provided with a number of first through openings (44), wherein the openings (44) are configured for directing, in use, the heated air flow towards the first lateral portion (4A); wherein the distribution housing (30) is integrated with the diffusion housing (42).

## Description

### TECHNICAL FIELD

The present invention relates to a device for directing a heated air flow towards a first lateral portion of a web of packaging material, to a forming and sealing unit for forming a tube from a web of packaging material and to a packaging machine for producing sealed packages from a packaging material.

### BACKGROUND ART

As it is known, many liquid or pourable food products, such as for example pasteurized or long-life (UHT) milk, tomato sauce, wine, fruit juice are sold in packages made of sterilized packaging material.

Packages of this sort are normally produced with automatic packaging machines, which feed a web of packaging material through a sterilizing unit by means of known guiding elements (like for example rollers) for sterilizing the web of packaging material alternatively by means of chemical sterilization in a sterilizing bath (e.g. by applying a chemical sterilizing agent, such as a hydrogen peroxide solution) or by means of physical sterilization (e.g. by means of an electron beam).

The packaging machine further comprises a folding unit arranged downstream of the sterilizing unit, extending substantially vertically and designed to fold the web of packaging material for producing a continuous tube. Inside the folding unit, the web of packaging material is folded from a continuous planar shape to a continuous tubular shape with a vertical axis. The web of packaging material with a planar shape is folded into a cylinder that is successively subdivided into a plurality of pillow packs which are subjected to successive mechanical folding operations to obtain the finished sealed packages.

The folding unit is preferably arranged within a fixed structure in which the web of packaging material is maintained in a sterile-air environment. The folding unit further comprises a number of folding devices placed in succession (one after the other): by interacting with the folding devices, opposite lateral portions (or edges) of the web of packaging material are placed one on top of one another so as to form the tube and so as to define an overlapping area.

The packaging machine further comprises a sealing unit for sealing overlapping lateral portions of the web of packaging material to finally obtain a fluid-tight longitudinal seal in the tube. Typically, the sealing unit is arranged between two folding devices along the conveying path and comprises a heating device and a number of supporting devices, at least partially connected to the heating device, and realized to contact and maintain in a predetermined position at least part of the web of packaging material. The heating device is provided with a distribution housing having an inlet for receiving a heated air flow; the distribution housing is connected through removable connecting elements to a diffusion housing provided with several openings for directing, in use, the heated air flow towards at least a first lateral portion.

The assembly defined by the heating device and the supporting devices connected thereto is movable between an operating position wherein the heating device is interposed between the two overlapping lateral portions and a rest position wherein the assembly is at a distance from the web of packaging material. When the advancement of the web of packaging material along the conveying path is interrupted, the assembly made by the heating device and the supporting devices is moved from the operating position to the rest position to avoid directing too much heat onto the web of packaging material.

Even though the known folding and sealing units operate satisfyingly well, a desire is felt for improving the known units. In particular, the heating device is difficult to be cleaned and is characterized by a relevant thermal inertia that requires more energy consumption and produces heating resistance stress. The thermal inertia of the components of the heating device and their removable connecting elements produces an inhomogeneous distribution of temperature which could generate a non-uniform heating of the web of packaging material.

### DISCLOSURE OF INVENTION

The object of the invention is to provide a device for directing a heated air flow towards a web of packaging material addressing the drawbacks of the state of the art and, in particular, being easy and economical to be manufactured.

A further object of the invention is to provide a forming and sealing unit for forming a tube from a web of packaging material addressing the drawbacks of the state of the art and, in particular, being easy and economical to be manufactured.

Finally, a further object of the invention is to provide a packaging machine for producing sealed packages from a packaging material addressing the drawbacks of the state of the art and, in particular, being easy and economical to be manufactured.

According to the invention, there are provided a device for directing a heated air flow towards a web of packaging material, a forming and sealing unit for forming a tube from a web of packaging material and a packaging machine for producing sealed packages from a packaging material according to the appended claims.

### BRIEF DESCRIPTION OF THE DRAWINGS

A non-limiting embodiment of the present invention will be described by way of example with reference to the accompanying drawings, in which:
- figure 1 is a perspective view, with parts removed for clarity, of a packaging machine for producing packages from a packaging material, in accordance with the present invention;
- figure 2 is a schematic side view of the packaging machine of figure 1;

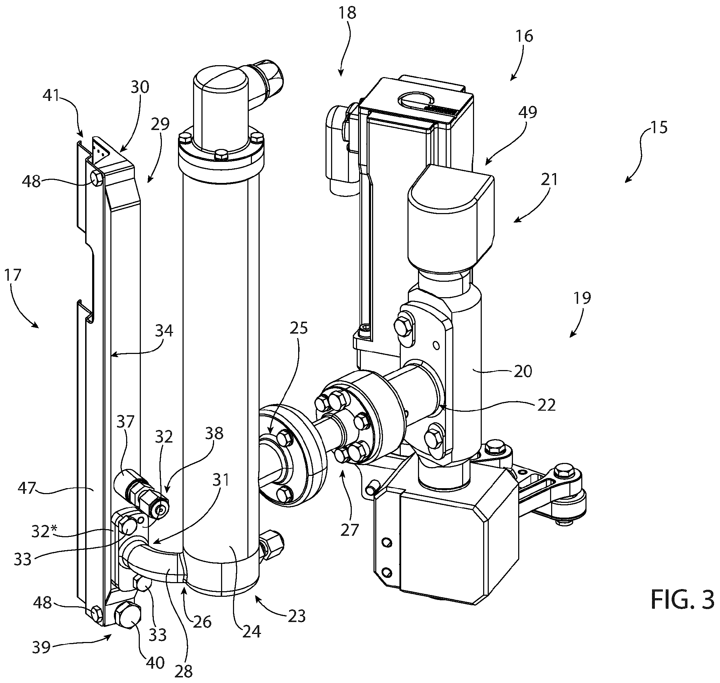

- figure 3 is a perspective view, with parts removed for clarity, of a heating unit of the packaging machine of figure 1;

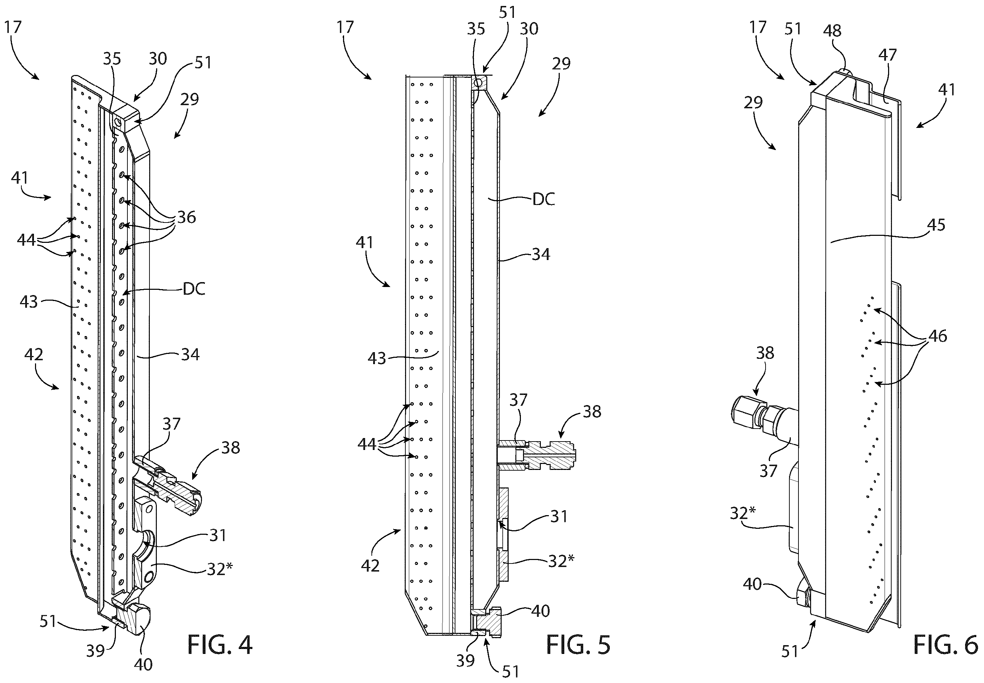

- figure 4 is a perspective and partially sectional view, with parts removed for clarity, of a device of the heating unit of figure 3;
- figure 5 is a front and partially sectional view, with parts removed for clarity, of the device of figure 4; and
- figure 6 is a perspective and rear view, with parts removed for clarity, of the device of figure 4.

### BEST MODE FOR CARRYING OUT THE INVENTION

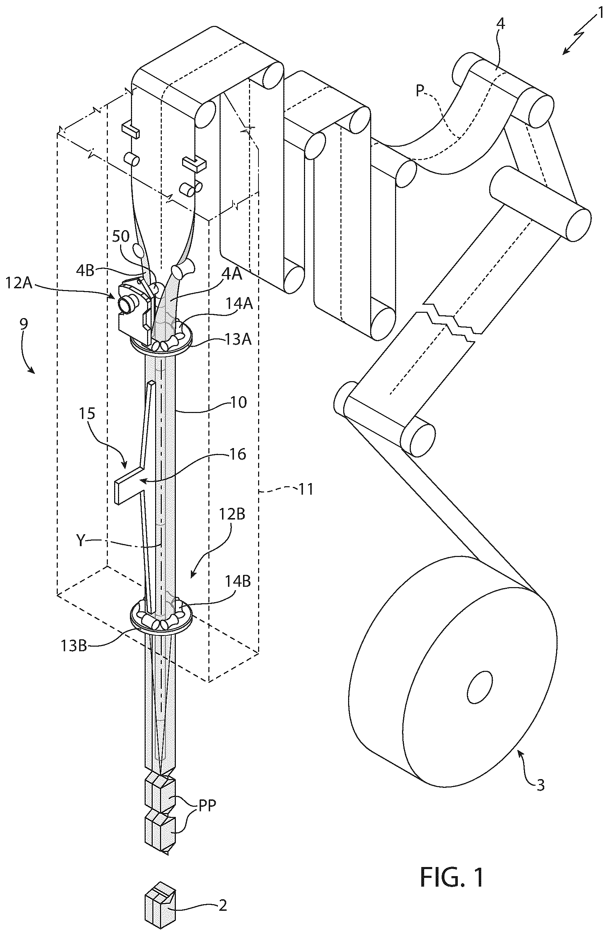

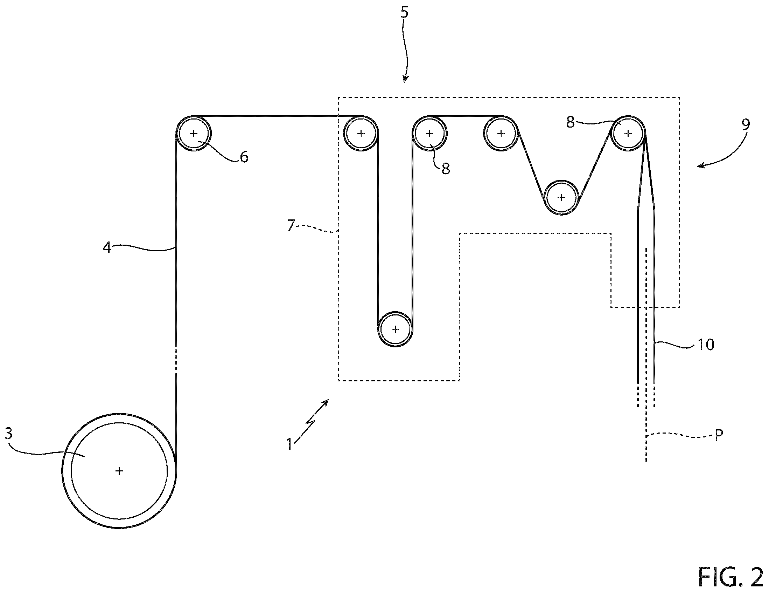

Figures 1 and 2 disclose, as a whole, a packaging machine 1 for continuously producing sealed packages 2, containing a pourable food product, such as for example pasteurized or long-life (UHT) milk, tomato sauce, wine, fruit juice. The sealed packages are obtained from a packaging material unwound from a reel 3 and fed along a conveying path P. When unwound from the reel 3, the packaging material has the shape of a continuous planar web 4 of packaging material.

Typically, the packaging material has a multi-layer structure. More specifically, the packaging material may comprise at least a layer of fibrous material, such as for example a paper or cardboard layer, and at least two layers of heat-seal plastic material, e.g. polyethylene, with the layer of fibrous material interposed between them. One of these two layers of heat-seal plastic material may define the inner face of the packages eventually contacting the pourable product.

According to some possible non-limiting embodiments, the packaging material may also comprise a layer of gas- and light-barrier material, e.g. aluminum foil or ethylene vinyl alcohol (EVOH) film, which, in particular, is arranged between one of the layers of heat-seal plastic material and the layer of fibrous material. Preferably, the packaging material may also comprise a further layer of heat-seal plastic material interposed between the layer of gas- and light-barrier material and the layer of fibrous material.

The web 4 of packaging material is fed to a sterilizing unit 5 by means of guiding elements 6, in particular by a number of rollers 6 (one of said rollers is illustrated in figure 2). The sterilizing unit 5 has a sterilizing bath 7, in which a chemical sterilizing agent, such as a hydrogen peroxide solution, is applied to the web 4 of packaging material. The web 4 of packaging material is fed through the sterilizing unit 5 by means of known guiding elements 8, like for example rollers 8 or similar elements.

The packaging machine 1 further comprises a forming and sealing unit 9 arranged downstream of the sterilizing unit 5 along the conveying path P. The forming and sealing unit 9 extends substantially vertically along the conveying path P for producing a continuous tube 10. In particular, inside forming and sealing unit 9, the web 4 of packaging material is folded from a continuous planar shape to a continuous tubular shape with a longitudinal axis Y. In particular, the longitudinal axis Y is arranged along a vertical direction.

The forming and sealing unit 9 is defined within a fixed structure 11 in which the web 4 of packaging material is maintained in a sterile-air environment. The forming and sealing unit 9 further comprises a number of forming/folding devices 12 placed along the conveying path P in succession (one after the other).

Advantageously, each of said folding devices 12 may comprise a ring-like shape, e.g. at least partially enclosing the web 4 of packaging material. For example, the folding device 12 may comprise a forming ring 13 surrounding the web 4 of packaging material. The supporting device 12 may be configured for supporting a number of rollers 14 cooperating to fold the web 4 of packaging material.

In particular, the forming and sealing unit 9 comprises a (first) folding device 12A and a (second) folding device 12B placed along the conveying path P in succession (one after the other) carried by the fixed structure 11, and interacting with the web 4 of packaging material to fold the web 4 of packaging material gradually into a tube (cylinder) and superimpose a first lateral portion 4A of the web 4 of packaging material to a second lateral portion 4B of the web 4 of packaging material, opposite the first lateral portion 4A, to form the continuous tube 10. The folding device 12B is placed downstream of the folding device 12A along the conveying path P.

With particular reference to figure 1, the first folding device 12A comprises the first folding ring 13A supporting a plurality of first folding rollers 14A; said first folding rollers 14A have respective axes perpendicular to the axis Y. Said first folding rollers 14A have respective lateral surfaces with preferably concave shape (i.e. the web 4 of packaging material encounters a diameter at the ends greater than a diameter at the center of the first folding rollers 14A). The lateral surfaces of the first folding rollers 14A define a first compulsory passage for the web 4 of packaging material being folded.

Similarly, the second folding device 12B comprises the second folding ring 13B supporting a plurality of second folding rollers 14B; said second folding rollers 14B have respective axes perpendicular to the axis Y. Said second folding rollers 14B have respective lateral surfaces with concave shape (i.e. the web 4 of packaging material encounters a diameter at the ends greater than a diameter at the center of the second folding rollers 14B). The lateral surfaces of the second folding rollers 14A define a second compulsory passage for the web 4 of packaging material being folded.

The first compulsory passage and the second compulsory passage are different in section. More in detail, the web 4 of packaging material has a substantially C-shape in the area of the first folding device 12A and a substantially circular shape in the area of the second folding device 12B. A gap is defined between the first lateral portion 4A and the second lateral portion 4B of the web 4 of packaging material which decreases gradually in section along the conveying path P from the first compulsory passage to the second compulsory passage.

The forming and sealing unit 9 comprises a number of supporting elements (not shown) configured to contact and maintain in a predetermined position the first lateral portion 4A and the second lateral portion 4B of the web 4 of packaging material. The number of supporting elements is arranged in a fixed position with respect to the forming devices 12.

Finally, the forming and sealing unit 9 comprises a sealing apparatus 15 for sealing overlapping lateral portions 4A, 4B of the web 4 of packaging material to obtain a fluid-tight longitudinal seal in the tube 10. The sealing apparatus 15 is arranged downstream of the first folding devices 12A along the conveying path P. Advantageously, the sealing unit 15 is interposed between the two folding devices 12A, 12B.

Along the conveying path P it is defined a sealing region in correspondence of the sealing unit 15. The sealing apparatus 15 comprises a heating unit 16. More in detail, the sealing region is defined along the conveying path P in the area wherein the heating unit 16 is interposed between the two lateral portions 4A, 4B the web 4 of packaging material.

The heating unit 16 comprises a device 17. Advantageously, the device 17 is configured for directing hot air onto the internal surface of the first lateral portion 4A to be superimposed the facing surface of the second lateral portion 4B. The internal surface of the first lateral portion 4A is the surface facing the second lateral portion 4B. Preferably, the device 17 is configured for directing hot air onto the internal surface of the second lateral portion 4B (facing and to be superimposed the internal surface of the first lateral portion 4A).

The heating unit 16 further comprises an air circuit 18 configured for supplying hot air to the device 17. The air circuit 18 comprises a sterile air inlet body 19. The inlet body 19 comprises a housing 20 having a longitudinal development and provided with a first opening 21 for the entry of a sterile air flow provided at a first end of the housing 20. Preferably, the air flow enters the inlet body 19 at a first (predetermined) temperature. Preferably, the first opening 21 for the entry of the air flow is provided at an upper/superior end of the housing 20. The air flow exits the inlet body 19 through a second 22 opening provided at a second end of the housing 20, opposite to the first end. Preferably, the air flow exits the inlet body 19 at the first (predetermined) temperature. Preferably, the second opening for the exit of the air flow is provided at a lower end of the housing 20.

The air circuit 18 further comprises a heating body 23, which is in fluidic communication with the inlet body 19. The heating body 23 comprises a housing 24 having a substantial longitudinal development. The housing 24 comprises a cylindrical lateral wall provided with a (first) inlet opening 25 for the entry of the air flow supplied from the inlet body 19. The first opening 25 is provided at a first end of the housing 24. Preferably, the air flow enters the heating body 23 at a first (predetermined) temperature. Preferably, the first opening 25 for the entry of the air flow is arranged at a lower end of the housing 24. The air flow exits the heating body 23 through a (second) outlet opening 26 provided at a second end of the housing 24. Advantageously, the outlet opening 26 is arranged substantially facing the inlet opening 25; in other words, the outlet opening 26 and the inlet opening 25 are provided at the same end of the housing 24, preferably facing each other. Preferably, the outlet opening 26 for the exit of the air flow is arranged at the lower end of the housing 24. Preferably, the air flow exits the heating body 23 at temperature higher than the first (predetermined) temperature.

The heating body 23 further comprises heating means (not shown) arranged within the housing 24. Advantageously, the heating means comprise a resistor arranged within the housing 24. The heating means are configured to heat to a predetermined temperature value the air flow, which enters at room temperature the housing 24 through the inlet opening 25. In other words, the air flow enters the heating body 23 through the inlet opening 25 at the first (predetermined) temperature, passes through the housing 24 while being heated by the resistor and comes out from the outlet opening 26 at the predetermined temperature value.

The inlet body 19 and the heating body 23 are connected to each other with the interposition of a coupling element 27.

The air circuit 18 further comprises a duct 28 which supplies the air flow coming from the heating body 23 to the device 17.

The device 17 comprises a distributor element 29 defined by a distribution housing 30 having a longitudinal development and provided with a (first) inlet opening 30 for the air flow. Preferably, the inlet opening 31 is provided at a first end of the distribution housing 30 for the entry of the air flow. Even more preferably, the inlet opening 30 is provided at a lower end of the distribution housing 30.

The distribution housing 30 is configured to receive the heated air flow from the inlet opening 31.

The distributor element 29 is in fluidic communication with the duct 28, which supplies the (hot) air flow coming from the heating body 23. The duct 28 is provided with a terminal flange 32 configured for the connection with the device 17 by means of fixing means 33, for example screws. Preferably, the flanges 32 is configured for the connection with the distributor element 29. Advantageously, the distributor element 29 is provided with a flange 32* configured for the connection with the duct 28. The distributor element 29 is connected to the heating body 23 exclusively through the duct 28, preferably at/in the area of a lower end of the distribution housing 30. The two flanges 32, 32* are arranged in contact, have substantially the same shape and are configured to be connected to each other through the fixing means 33.

The distribution housing 30 comprises a (first) lateral wall 34 provided with the inlet opening 31 for the air flow. The distributor element 29 comprises a distributor plate 35 arranged within the distribution housing 30. The distributor plate 35 is provided with a number of through holes or openings 36 for the passage of the air flow. In particular, the distributor plate 35 is provided with a plurality of through openings 36 for the passage of the air flow. Preferably, the openings 36 are uniformly (evenly) distributed into the distributor plate 35. The distributor element 29 comprises a distribution chamber DC defined within the distribution housing 30 e delimited by the distribution plate 35. The (hot) air flow enters the distributor element 29 through the inlet opening 31, it is distributed into the distribution chamber DC and finally comes out through the openings 36.

The lateral wall 34 is further provided with a (first) appendix 37 protruding therefrom and comprising a cylindrical side wall configured to define a seat in fluidically communication with the distribution chamber DC and configured for accommodating a (first) temperature sensing device 38. The temperature sensing device 38 is configured to detect the temperature of the air flow. Preferably, the temperature sensing device 38 comprises a thermocouple. The appendix 37 is arranged at the inlet opening 31. In particular, the appendix 37 is arranged in close proximity to the inlet opening 31. Preferably, the appendix 37 is arranged above the inlet opening 31.

The lateral wall 34 is provided with a (second) appendix 39 protruding therefrom and comprising a cylindrical side wall configured to define a seat in fluidically communication with the distribution chamber DC. The seat may accommodate a closing element 40 (or a plug) or alternatively a (second) temperature sensing device. The appendix 39 is arranged at one end of the lateral wall 34. The appendix 39 is arranged at (in the area of) the inlet opening 31. In particular, the appendix 39 is arranged in close proximity to the inlet opening 31. Preferably, the 39 appendix is arranged below the inlet opening 31. The appendixes 37, 39 are arranged at respectively opposite sides of the inlet opening 31.

The device 17 comprises a nozzle element 41 defined by a diffusion housing 42 having a longitudinal development and being in fluidic communication with the distribution housing 30. More in detail, the nozzle element 41 is supplied with the air flow through the openings 36. The distribution housing 30 is configured to provide the heated air flow received from the inlet opening 31 to the diffusion housing 42 in an uniformly distributed manner.

The diffusion housing 42is provided with a first wall 43 which is arranged for facing, in use, the internal surface of the first lateral portion 4A to be superimposed the facing surface of the second lateral portion 4B. More in detail, the first wall 43 is arranged for being almost parallel, in use, to the internal surface of the first lateral portion 4A. The first wall 43 has a flat and/or continuous shape (i.e. without "interruption"). The first wall 43 defines a heating area. More in detail, the first wall 43 has a substantially flat and/or continuous shape throughout the heating area. The heating area is defined as an area where the web 4 of packaging material (in particular, the longitudinal edge of the surface of the first lateral portion 4A facing the first wall) is heated.

The first wall 43 is provided with a number of through holes or openings 44 for the passage of the heated air flow directed towards the internal surface of the first lateral portion 4A. In particular, the first wall 43 is provided with a plurality of through openings 44 for the passage of the heated air flow. Preferably, the openings 44 are uniformly (evenly) distributed into the first wall 43. The openings 44 are configured for directing, in use, hot air onto the internal surface of the first lateral portion 4A. The nozzle element 41 is further provided with a second wall 45, opposite to the first wall 43. The second wall 45 is arranged for facing, in use, the internal surface of the second lateral portion 4B to be superimposed the internal surface of the first lateral portion 4A. More in detail, the second wall 45 is arranged for being almost parallel, in use, to the internal surface of the second lateral portion 4B.

According to a preferred embodiment, the second wall 45 is provided with a number of through holes or openings 46 for the passage of the heated air flow directed towards the internal surface of the second lateral portion 4B. In particular, the second wall 45 is provided with a plurality of openings 46 for the passage of the heated air flow. Preferably, the openings 46 are uniformly (evenly) distributed into the second wall 45. The openings 46 are configured for directing, in use, hot air onto the (longitudinal edge of the) internal surface of the second lateral portion 4B.

The presence of the openings 46 provides a more uniform heating of the web 4 of packaging material and helps to improve the sealing of the overlapping lateral portions 4A, 4B to obtain a fluid-tight longitudinal seal in the tube 10.

Finally, according to a preferred embodiment, the device 17 comprises a wing 47. More in detail, the wing 47 is connected in a releasable manner to the distribution housing 30 and/or to the diffusion housing 42. The wing 47 is connected to the distribution housing 30 and/or to the diffusion housing 42 at opposite lateral extremities thereof. The wing 47 is connected to an area of the distribution housing 30 and/or of the diffusion 42 without openings to enable a good gripping and to avoid blocking the heated air flow.

The wing 47 is connected at respective ends of the distribution housing 30 and/or of the diffusion housing 42through fixing means 48 (for example screws).

The wing 47 comprises a metal plate of reduced thickness. The distributor wing has a substantially S shape and comprises a first portion configured for the connection to the nozzle element 41 and a second portion which is arranged facing, in use, the first wall 43 (and the external surface of the first lateral portion 4A). More in detail, the second portion has a surface arranged for being almost parallel, in use, to the first wall 43 (and to the external surface of the first lateral portion 4A). Said surface of the second portion is substantially last and/or continuous (i.e. without interruption). The first lateral portion 4A is configured for being arranged, in use, within the space defined between the second portion of the wing 47 and the first wall 43.

The presence of the wing 47 provides a more uniform heating of the web 4 of packaging material and helps to improve the sealing of the overlapping lateral portions 4A, 4B to obtain a fluid-tight longitudinal seal in the tube 10.

The device 17 comprises a number of solid connecting elements 51 for connecting the wing 47 to the distribution housing 30 and/or to the diffusion housing 42. More in detail, the device 17 comprises a plurality of solid connecting elements 51 for connecting the wing 47 to the distribution housing 30 and/or to the diffusion housing 42. In particular, the device 17 comprises two solid connecting elements 51 for connecting the wing 47 to respective lateral ends/extremities of the distribution housing 30 and/or of the diffusion housing 42. The solid connecting elements 51 are free of any internal cavity. The presence of the solid connecting elements 51 provides a good gripping without increasing the thermal inertia.

The device 17 is made in one piece (preferably by means of a welding process).

More in detail, the distribution housing 30 is integrated with the diffusion housing 42; in other words, the distribution housing 30 and the diffusion housing 42 form (or define) a unified whole. The distribution housing 30 is integral to the diffusion housing 42. The distribution housing 30 and the diffusion housing 42 are permanently connected (or joined) one to another. The device 17 does not comprise any fixing means for connecting the diffusion housing 42 to the distribution housing 30. By integrating the distribution housing 30 with the diffusion housing 42, the thermal inertia of the device 17 is reduced and the thermal efficiency of the device 17 is increased. Moreover, the device 17 is easier to clean.

Moreover, it is important to highlight that both the first lateral portion 4A and the second lateral portion 4B are, in use, always arranged at a (non-zero) distance from the device 17. In other words, in use, the device 17 is not arranged in contact with the first lateral portion 4A and/or with the second lateral portion 4B. In use, each component of the device 17 is maintained at a non-zero distance from the web 4 of packaging material and is never in contact with the web 4 of packaging material.

Finally, the device 17 is free from any supporting element (in other words, the device 17 is not connected to any supporting element) realized to contact and maintain in a predetermined position at least part of the web 4 of packaging material (comprising rollers or conical shaped elements, called "fingers"), in particular to contact and maintain in a predetermined position the external surface of the first lateral portion 4A or the external surface of the second lateral portion 4B.

The air circuit 18 is supported by an arm carried 49 by the fixed structure 11. In more detail, the air circuit 18 (in particular the device 17) is realized to be mobile between an operating position wherein the first lateral portion 4A is interposed between the second portion of the wing 47 and the first wall 43 and the second lateral portion 4B is arranged facing the second wall 45; and a rest position wherein the air circuit 18 (in particular the device 17) is away from the web 4 of packaging material; and vice versa from the rest position to the operating position.

Finally, the tube 10 is continuously filled with the pourable food product through a pour conduit 50, which partially extends inside the tube 10 and is part of a filling circuit. The tube 50 is sent to a transverse forming sealing unit (not shown), in which the tube 10 is gripped to transversely seal the tube and form pillow packs PP. Finally, the pillow packs PP are subjected to successive mechanical folding operations to obtain the finished sealed packages 2.

The device 17 realized according to the present invention has some advantages thar result clear from the foregoing description. In particular, the device 17 is relatively easy to be manufactured in one piece. Moreover, the device 17 has a reduced mass with a compact shape; the nozzle device is therefore extremely easy to be assembled to the air circuit 18 and is characterized by reduced hygienic problems. Finally, the two lateral walls 43 and 45 (free from any supporting elements) are characterized by a uniform distribution of temperature which results in a uniform heating of the web 4 of packaging material.

### LIST OF REFERENCE NUMBERS

- 1: packaging machine
- 2: package
- 3: reel
- 4: web of packaging material
- 5: sterilizing unit
- 6: guiding element
- 7: sterilizing bath
- 8: guiding element
- 9: forming and sealing unit
- 10: tube
- 11: structure
- 12,12A,12 B: folding device
- 13,13A,13 B: forming ring
- 14,14A,14 B: folding roller
- 15: sealing apparatus
- 16: heating unit
- 17: device
- 18: air circuit
- 19: inlet body
- 20: housing
- 21: opening
- 22: opening
- 23: heating body
- 24: housing
- 25: inlet opening
- 26: outlet opening
- 27: coupling element
- 28: duct
- 29: distributor element
- 30: distribution housing
- 31: inlet opening
- 32,32*: flange
- 33: fixing means
- 34: lateral wall
- 35: distributor plate
- 36: opening
- 37: appendix
- 38: temperature sensing device
- 39: appendix
- 40: closing element
- 41: nozzle element
- 42: diffusion housing
- 43: first wall
- 44: opening
- 45: second wall
- 46: openings
- 47: wing
- 48: fixing means
- 49: arm
- 50: conduit
- 51: connecting element
- P: conveying path
- X: axis
- DC: distribution chamber
- PP: pillow pack

## Claims

1. **-** A device (17) for directing a heated air flow towards a first lateral portion (4A) of a web (4) of packaging material, the device (17) comprising:
- a distribution housing (30) provided with a first inlet opening (31) for receiving the heated air flow; and
- a diffusion housing (42) in fluidic communication with the distribution housing (30) and comprising a first wall (43) provided with a number of first through openings (44), wherein the openings (44) are configured for directing, in use, the heated air flow towards the first lateral portion (4A) ;
wherein the distribution housing (30) is integrated with the diffusion housing (42).

2. **-**The device according to claim 1, wherein the distribution housing (30) is configured to receive the heated air flow from the inlet opening (31) and provide a uniformly distributed heated air flow to the diffusion housing (42).

3. **-**The device according to claim 1 or claim 2, wherein the distribution housing (30) is permanently connected or joined to the diffusion housing (42).

4. **-**The device (17) according to any of the previous claims, wherein the first wall (43) has a substantially flat and/or continuous shape throughout a heating area.

5. **-**The device according to any of the previous claims, wherein the device (17) is maintained at a non-zero distance from the web (4) of packaging material.

6. **-**The device according to any previous claim wherein the diffusion housing (42) comprises a second wall (45), preferably opposite to the first wall (43), provided with a number of second through openings (46) configured for directing, in use, the heated air flow towards a further lateral portion (4B) of the web (4) of packaging material, the further lateral portion (4B) being opposite the first lateral portion (4A).

7. **-**The device according to any of the previous claims and comprising a wing (47) having a surface facing the first wall (43), wherein the surface is substantially flat and/or continuous.

8. **-**The device according to the preceding claim, wherein the wing (47) is connected in a releasable manner to the distribution (30) housing and/or to the diffusion (42) housing.

9. **-**The device according to the preceding claim, comprising a number of solid connecting elements (51) for connecting the wing (47) to the distribution housing (30) and/or diffusion (42) housing (30).

10. The device according to claim 8 or claim 9, wherein the wing (47) is connectable to the distribution (30) housing and/or to the diffusion (42) housing at opposite lateral extremities thereof.

11. The device according to any of claims 7 to 10, wherein the first wall (43) and said surface of the wing (47) define a heating area where the heated air flow is substantially uniformly distributed.

12. A forming and sealing unit (9) for folding a web (4) of packaging material into a tube (10) by superimposing a first lateral portion (4A) of the web (4) of packaging material to a second lateral portion (4B) of the web (4) of packaging material and for sealing the overlapping first and second lateral portions (4A, 4B), the forming and sealing unit (9) comprising:
- at least a device (17) according to any of the previous claims; and
- an air circuit (18) comprising a heating body (23) configured for receiving an air flow at a first predetermined temperature and for heating the air flow to a second predetermined temperature higher than the first predetermined temperature; wherein the heated air flow coming out from the heating body (23) is supplied to the device (17).

13. The forming and sealing unit (9) according to the preceding claim and further comprising:
- a number of forming devices (12) placed along a conveying path (P) in succession and configured to fold the web (4) of packaging material; and
- a plurality of supporting elements configured to contact and maintain in a predetermined position said first and second lateral portions (4A, 4B) of the web (4) of packaging material; wherein said plurality of supporting elements is arranged in a fixed position with respect to the forming devices (12).

14. The forming and sealing unit according to the preceding claim, wherein the device (17) is free from supporting elements.

15. A packaging machine (1) for producing sealed packages (2) from a packaging material fed along a conveying path (P) and comprising a forming and sealing unit (9) according to any of claims 12 to 14.
